# EUROPEAN PATENT APPLICATION

(11) **EP 2 323 004 A2**
(43) Date of publication of application: **18.05.2011**
(21) Application number: 10191139.4
(22) Date of filing: 15.11.2010
(51) Int. Cl.: G05B 19/042, G06F 9/445

(54) **Method for operating an electronic control unit during a calibration phase**

(30) Priority: 17.11.2009 IT BO20090749
(71) Applicant: Magneti Marelli S.p.A., Corbetta (MI) (IT)
(72) Inventor: Garofalo, Daniele, 40033, CASALECCHIO DI RENO (IT); Valacca, Roberto, 40128, BOLOGNA (IT); Marceca, Paolo, 40137, BOLOGNA (IT)
(74) Representative: Jorio, Paolo

(57) **Abstract**

A method for operating an electronic control unit (1) during a calibration phase; the method contemplating the steps of: dividing an area (C) of a FLASH storage memory (4) connected to a microprocessor (2) in two pages (C1, C2) between them identical and redundant, each of which is aimed at storing all the calibration parameters used by a control software; and using the two pages (C1,C2) alternatively so that a first page (C1;C2) contains the values of the calibration parameters and is queried by the microprocessor (2), while a second page (C2; C1) is cleared and made available to store the updated values of the calibration parameters.

## Description

### TECHNICAL FIELD

The present invention relates to a method for operating an electronic control unit during a calibration phase.

The present invention finds advantageous application in an electronic control unit of an engine, to which explicit reference will be made in the description below without for this loosing in generality.

### PRIOR ART

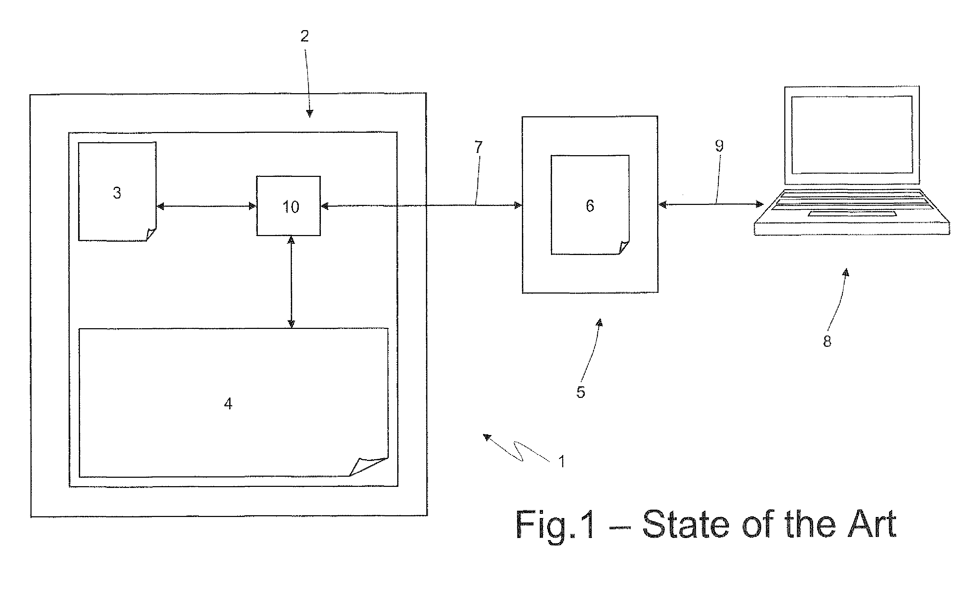

In figure 1, numeral 1 indicates as a whole an electronic control unit (ECU) of an engine. The electronic control unit 1 comprises a microprocessor 2, which is connected to a SRAM ("Static Random Access Memory") working memory 3, which has a low memory capacity (e.g. in the order of 48 Kbytes) and a high read/write/clear-access speed, and a FLASH storage memory 4, which has a high storage capacity (e.g. in the order of 4 Mbytes) and a low read/write/clear-access speed. The FLASH storage memory 4 remains unmodified when the electronic control unit 1 is shut down and is intended to permanently store both the control software, which is run by the microprocessor 2, and the value of the calibration parameters used by the control software. The SRAM working memory 3 is instead intended to store the instantaneous process variables used by the control software.

The correct operation of the control software is tested and the optimal values of the calibration parameters are established during a calibration (i.e. tuning) phase of the electronic control unit 1 by means of real tests in which the electronic control unit 1 governs the operation of an engine. For this purpose, it must be possible to read-access the instantaneous values of the process variables normally stored in the SRAM working memory 3 and the calibration parameter values normally stored in the FLASH storage memory 4, and it must be possible to write-access (i.e. modify) the calibration parameters normally sorted in the FLASH storage memory 4. During the operation of the electronic control unit 1, read-accessing the instantaneous values of the process variables stored in the SRAM working memory 3 is possible because the SRAM working memory 3 allows to read-access single bytes. During the operation of the electronic control unit 1, read-accessing the calibration parameters stored in the FLASH storage memory 4 is also possible because the FLASH storage memory 4 allows to read-access single bytes (at a slower reading speed than the SRAM working memory 3). Instead, during the operation of the electronic control unit 1 it is not possible to write-access the calibration parameters stored in the FLASH storage memory 4, because the FLASH storage memory 4 allows clearing entire sectors only (needed for subsequent re-writing) with long clearing times, and subsequent re-writing times (by way of example, the re-writing of the calibration parameters stored in the FLASH storage memory may require a time in the order of one second); during the time needed for clear and re-write the calibration parameters stored in the FLASH storage memory 4, the control software run by the microprocessor 2 would remain free from the calibration parameters values, and thus may not be able to suitably control the engine, which would thus stop (or display highly irregular operation and could even cause damage).

In order to allow to write-access the calibration parameters during the operation of the electronic control unit 1, an external communication module 5 (called "MEB - Memory Emulation Board") is currently used, which is provided with a quick-access, two-way type memory 6 ("Dual Port Ram") of relatively high capacity. The external communication module 5 is connected on one side to the microprocessor 2 by means of a communication bus 7, while on the other side the outer communication module 5 is connected to an external computer 8 by means of a standard type communication line 9 (e.g. according to the "USB" standard or according to the "Ethernet" standard). By operating on the memory management unit ("MMU") 10 of the microprocessor 2, the virtual addresses of the calibration parameter used by the control software are made to point to the memory 6 of the external communication module 5 instead of to the FLASH storage memory 4 in completely transparent manner for the control software itself. In this manner, with regards to the calibration parameters, the microprocessor 2 no longer works with the FLASH storage memory but works with the memory 6 of the external communication module 5 in manner entirely transparent for the control software. Consequently, the external computer 8, which is connected to the external communication module 5, can read - and above all modify - the values of the calibration parameters also during the operation of the electronic control unit 1 in extremely rapid manner and without involving the microprocessor 2.

However, the external communication module 5 has the drawback of being very costly, because it is a dedicated electronic component which is made in very limited amounts. Furthermore, in order to be able to guarantee the suitable access speed to the memory 6 by the microprocessor 2 the external communication module 5 must be connected to the microprocessor 2 by means of a communication bus 7 which engages a high number (at least twenty-thirty) of pins of the microprocessor 2. Consequently, only for calibration needs the microprocessor 2 must be provided with a high number of free feet intended to be intended to the dedicated communication bus 7 dedicated to the external communication module 5 with consequent increase of the production costs of the microprocessor 2; it is important to underline that this increase of complexity (and thus of cost) of the microprocessor 2 does not bring any advantages to the engine control during the normal working life of the electronic control unit 1 but is only intended to allow calibration.

Patent application EP1225490A2 describes an operating method for an electronic control unit during a calibration phase according to which a FLASH storage memory 202 is divided into two pages 220 and 222 between them identical and redundant and each of which is aimed at storing all the calibration parameters used by a control software; page 222 is a reference page, which is never modified in use (i.e. rewritten only at the end of the calibration process), while page 220 is the real working page which is continuously written in use. In order to modify the content of page 220 the RAM memory 266 working in overlay is initially used; when it is necessary to transfer the content from the RAM memory 266 to page 220, then the software temporarily uses page 222 for all the time needed to rewrite page 220. The method described in patent application EP1225490A2 has the drawback of requiring the use of a RAM memory 266 which overlays page 220 of the FLASH storage memory 202.

### DESCRIPTION OF THE INVENTION

It is the object of the present invention to provide a method for controlling an electronic control unit during a step of calibration, which is free from the above-described drawbacks and, specifically, is easy and cost-effective to implement.

According to the present invention, the present invention provides a method for operating an electronic control unit during a calibration phase as disclosed in the appended claims.

### BRIEF DESCRIPTION OF THE DRAWINGS

The present invention will now be described with reference to the accompanying drawings, which set forth some non-limitative embodiments thereof, in which:
- figure 1 is a diagrammatic view of an electronic control unit during a calibration phase which is carried out according to a known method comprised in the prior art;
- figure 2 is a diagrammatic view of an electronic control unit during a calibration phase which is carried out according to the present invention;
- figure 3 is a diagrammatic view of a use of a FLASH storage memory of the electronic control unit during the calibration phase; and
- figures 4, 5 and 6 are three alternative diagrammatic views of the electronic control unit in figure 2.

### PREFERRED EMBODIMENTS OF THE INVENTION

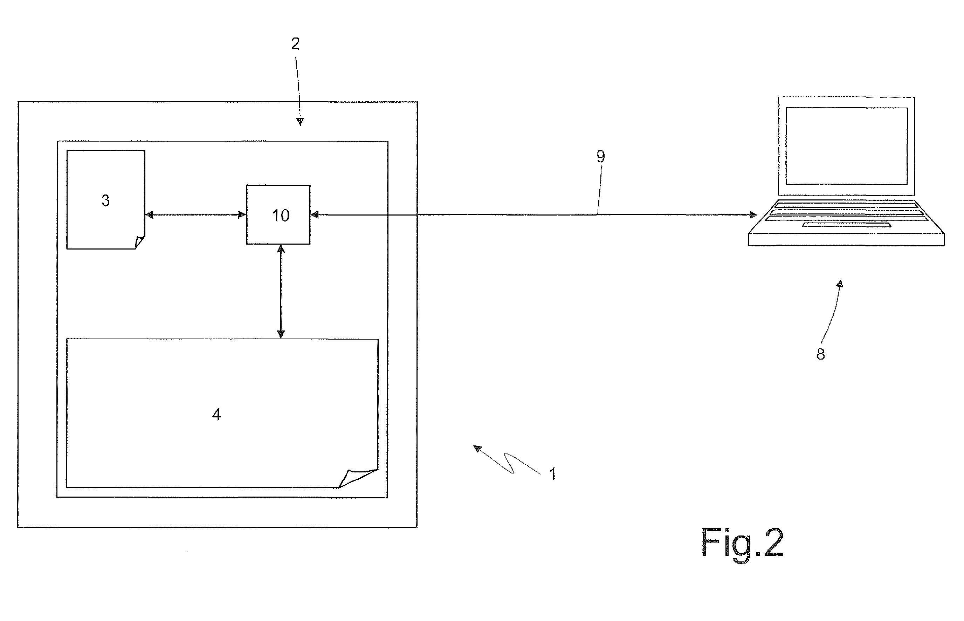

In figure 2, numeral 1 indicates as a whole an electronic control unit (ECU) of an engine. The electronic control unit 1 comprises a microprocessor 2, which is connected to a SRAM ("Static Random Access Memory") working memory 3, which has a low memory capacity (e.g. in the order of 48 Kbytes) and a high read/write/clear-access speed, and a FLASH storage memory 4, which has a high storage capacity (e.g. in the order of 4 Mbytes) and a low read/write/clear-access speed. The FLASH storage memory 4 remains unmodified when the electronic control unit 1 is shut down and is intended to permanently store both the control software, which is run by the microprocessor 2, and the value of the calibration parameters used by the control software. The SRAM working memory 3 instead is intended to temporarily store the instantaneous process variables used by the control software.

The SRAM working memory 3 is of the volatile RAM type which does not require refreshing. The SRAM memory banks allow to maintain the information for a theoretically infinite time, have fast reading time and low consumption, particularly in static conditions. The need to use many components per cell makes them costly. The FLASH memory is a type of EEPROM, and thus of nonvolatile memory, which for its performance may be used as read-write memory.

The correct operation of the control software is tested and the optimal values of the calibration parameters are established during a calibration (i.e. tuning) phase of the electronic control unit 1 by means of real tests in which the electronic control unit 1 superintends the operation of an engine. For this purpose, it must be possible to read-access the instantaneous values of the process variables normally stored in the SRAM working memory 3 and the calibration parameter values normally stored in the FLASH storage memory 4, and it must be possible to write-access (i.e. modify) the calibration parameters normally sorted in the FLASH storage memory 4.

In order to allow the above-described access to the instantaneous values of the process variables and to the calibration parameters, an external computer 8 is connected to the microprocessor 2 of the electronic control unit 1 by means of a communication line 9 which operates according to the "CAN - Car Area Network" standard.

During the step of calibration, read-access to the instantaneous values of the process variables stored in the SRAM working memory 3 is possible because the SRAM working memory 3 allows to read-access single bytes. During the operation of the electronic control unit 1, read-access to the calibration parameters stored in the FLASH storage memory 4 is possible because the FLASH storage memory 4 also allows to read-access the single bytes (at a slower reading speed with respect to the SRAM working memory 3).

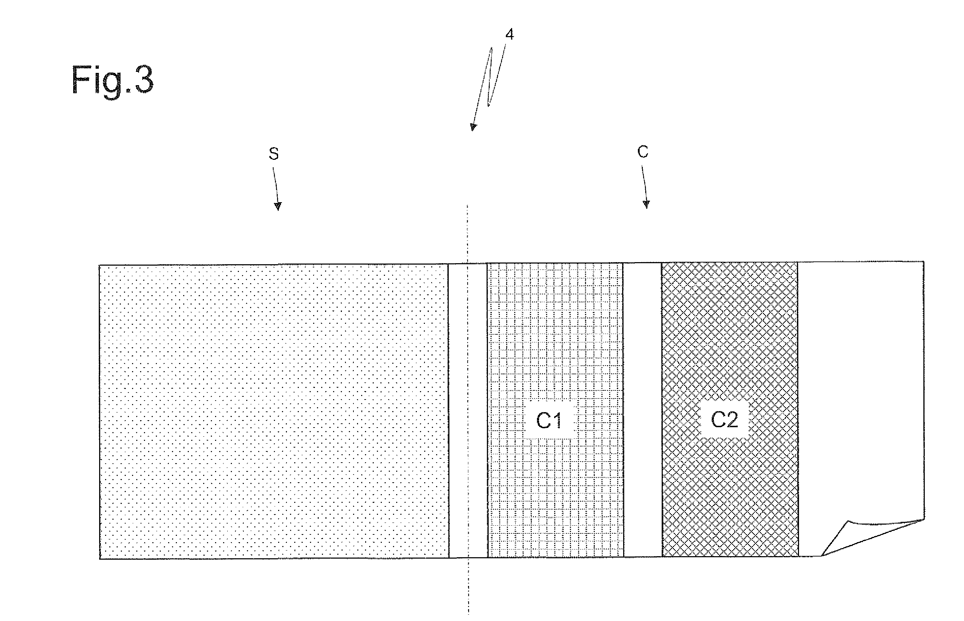

As shown in figure 3, the FLASH storage memory 4 is divided into an area S in which the control software is stored and an area C in which the values of the calibration parameters are stored; in turn, area C is divided into two pages C1 and C2 between them identical and redundant, each of which is aimed at storing all the calibration parameters. During standard operation, the calibration parameters are stored on page C1 (or page C2) and page C2 (or page C1) is not used in any manner by the microprocessor 2. Instead, during calibration operation, the two pages C1 and C2 are used in alternating manner by the microprocessor 2: for example, the calibration parameters are initially stored on page C1, while page C2 is kept clear, and when it is necessary to modify one or more calibration parameters the values of all calibration parameters (i.e. obviously updating at the same time) are written on page C2 and when the writing of pages C2 is complete, then the microprocessor 2 stops working with page C1 and starts working with page C2 (thus page C1 may be deleted to be ready for future re-writing). It is important to note that the two pages C1 and C2 of area C lie on two different "read-while-write" partitions so that a page C1 or C2 may be read, while the other page C2 or C1 is written and vice versa; furthermore, area C and area S lie on two different "read-while-write" partitions so that the area S may be read without interruptions, while a page C1 or C2 of area C is being written.

In other words, two pages C1 and C2 of the FLASH storage memory 4 are used, which lie on two different "read-while-write" partitions. During calibration, the microprocessor 2 accesses only one page C1 or C2 to read the values of the calibration parameters, while the other page C2 or C1 is available; when the value of one or more calibration parameters must be modified, a copy of the page C1 or C2 in use on page C2 or C1 available by updating the calibration parameter value to be modified. At the end of copying, the FLASH storage memory 4 stops working with the "old" page C1 and C2 containing the not updated values of the calibration parameters and starts working with the "new" page C2 or C1 containing the updated values of the calibration parameters.

In order to modify page C1 or C2 used by the microprocessor 2, a memory management unit MMU 10 of the microprocessor 2, which modifies the pointing of the virtual addresses of the calibration parameters used by the control software in completely transparent manner for the control software itself. In other words, the management unit 10 of the memory may indifferently point to the virtual addresses of the calibration parameters used by the control software on page C1 or on page C2.

It is worth noting that the change of page C1 or C2 used by the microprocessor 2 (i.e. the modification of the virtual addresses of the calibration parameters used by the control software carried out by the memory management unit 10) is extremely fast and does not affect the engine control carried out by the electronic control unit 1; thus page C1 or C2 used by the microprocessor 2 may be changed at any time during the calibration phase thus allowing to modify the value of one or more calibration parameters, while the electronic control unit 1 is controlling an engine.

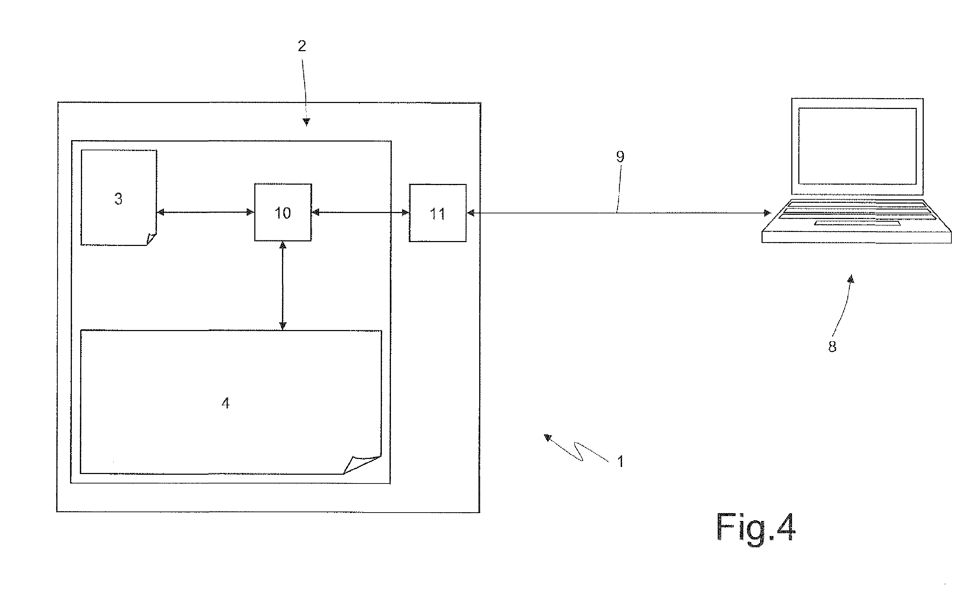

In the embodiment shown in figure 2, the microprocessor 2 of the electronic control unit 1 is connected to the external computer 8 by means of the communication line 9, which operates according to the "CAN" standard; the "CAN" standard has performance (mainly a data transmission speed) sufficient for calibration functions, but in all cases not optimal, because a faster data transmission speed may be desirable. According to the alternative embodiment shown in figure 4, instead of the "CAN" standard, the communication line 9 uses a synchronized serial communication standard of "SPI" type; e.g. either the "Nexus" standard or the "JTAG" standard, which are typical and generally present in this type of microprocessors, may be used. Until today, the communication interfaces present on a commercial personal computer are serial (typically according to "Ethernet" and "USB" standards), thus a bridge 11 must be introduced along the communication line 9 (generally integrated inside the electronic control unit 1), which bridge translates the synchronous serial signal of "SPI" type into an Ethernet or USB signal and vice versa. A protocol usable for communication along the communication line 9 could be the "XCP on Ethernet" protocol, which is standard and widely supported by all applications for a Personal Computer which manage the calibrations of an electronic control unit of an engine.

It is worth noting that the "CAN" standard and the synchronous serial communication standards of the "SPI" type employ a reduced number (generally no more than two or three) pins of the microprocessor 2; in this case, the calibration phase does not imply an increase of complexity, and thus of cost, of the microprocessor 2.

Furthermore, it is worth noting that the bridge 11 does not depend on the microprocessor 2 used but only on the communication interface towards the external computer 8, thus the same bridge 11 may be used for the different microprocessors 2.

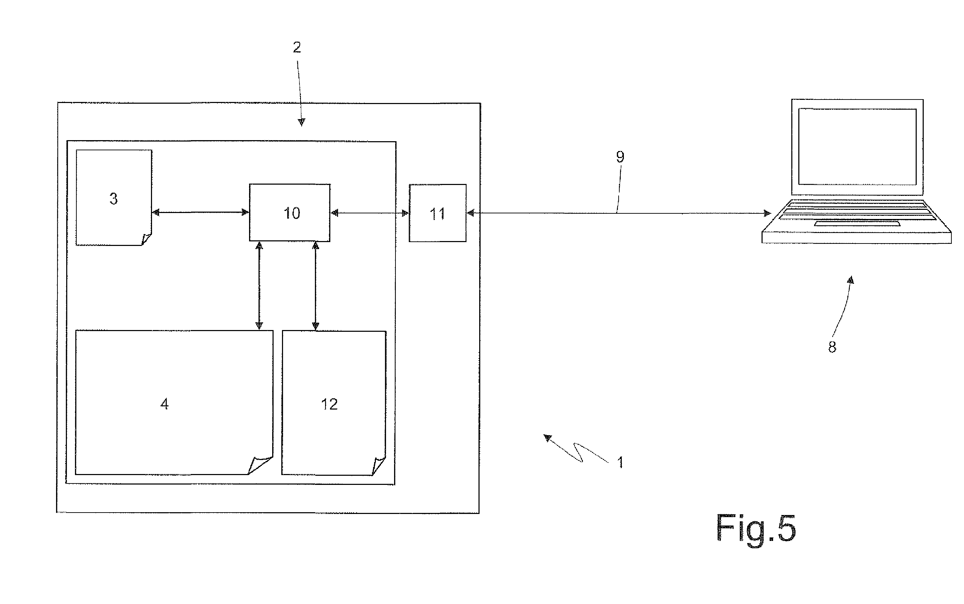

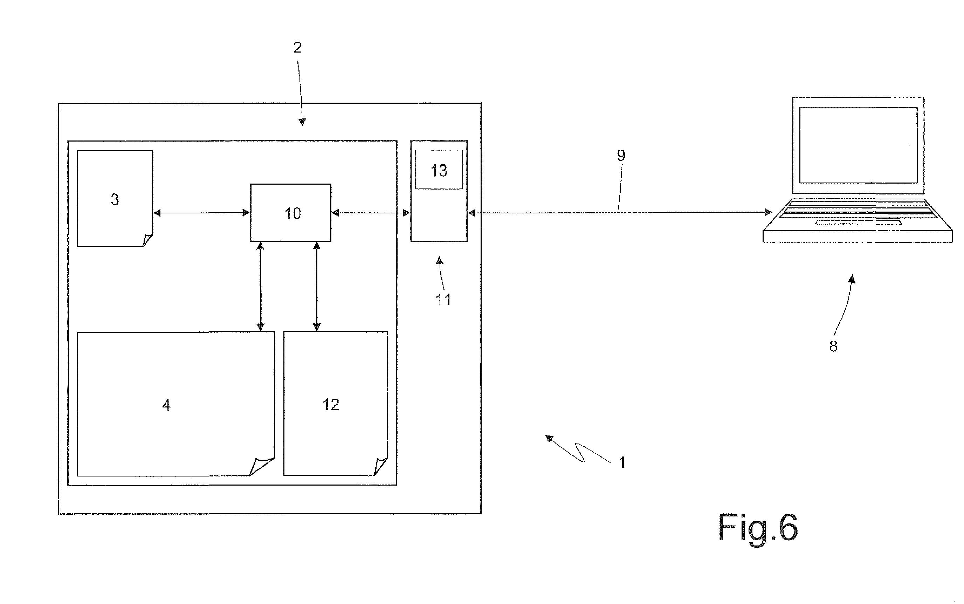

The embodiments described above and illustrated in figures 2 and 4 require that the FLASH storage memory 4 of the electronic control unit 1 is capable of holding the double page C1 and C2 for storing the values of the calibration parameters. If instead the FLASH storage memory 4 of the electronic control unit 1 cannot hold the double page C1 and C2 for storing the values of the calibration parameters (e.g. an insufficient memory capacity, for assisting "read-while-write" functionality, or for absence of the memory management unit 10), the embodiment shown in figures 5 and 6 described below must be used.

According to the embodiment shown in figure 5, the electronic control unit 1 comprises a further supplementary SRAM memory 12, which is dimensioned to contain the calibration parameter values and is only used during the calibration phase. In particular, only during the calibration phase the values of the calibration parameters are stored in the supplementary SRAM memory 12, while during normal use the values of the calibration parameters are stored in the FLASH storage memory 4. The SRAM supplementary memory 12 allows very rapid read/write/clear-access to the single bytes, thus it is possible to intervene to directly modify the value of a single calibration parameter in extremely rapid manner also when the electronic control unit 1 controls the engine. Thus, the update of the calibration parameter is substantially immediate without needing to wait to re-write an entire memory block.

A disadvantage still remains in the embodiments shown in figures 2, 4 and 5: the microprocessor 2 of the electronic control unit 1 must hold the work load deriving from the dialogue with the external computer 8; it is worth noting that such a work load can be supported by the microprocessor 2 also during engine control, even if it may occasionally cause the engine control itself to slow down. In order to make the burden of the work load deriving from the dialogue with the external computer 8 lighter, it has been thought to use the embodiment shown in figure 6, in which a "smart" bridge 11 is used, i.e. one provided with its own microprocessor 13, which manages the communication towards the external computer 8. In this manner, substantially all the work load deriving from the dialogue with the external computer 8 is supported by the microprocessor 13 of the "smart" bridge 11.

It is worth noting that the electronic control unit 1 is provided with a supplementary SRAM memory 12, which is typically a "special" electronic control unit 1, which is used only during the steps of calibration; the normal production is free from the SRAM supplementary memory 12. Such a situation due to the fact that the SRAM supplementary memory 12 is very costly because it must have a high memory capacity in order to store the values of the all the calibration parameters.

In the example described above, the electronic control unit 1 is used for controlling a thermal engine of a vehicle; alternatively, the electronic control unit 1 may be used to control a different type of vehicle component (e.g. a automatic manual transmission of AMT).

## Claims

1. A method for operating an electronic control unit (1) during a calibration phase; the method comprises the steps of:
dividing an area (C) of a FLASH storage memory (4) connected to a microprocessor (2) in two pages (C1, C2) between them identical and redundant, each of which is aimed at storing all the calibration parameters used by a control software;
having the two pages (C1, C2) on two different read-while-write partitions so that the first page (C1, C2) can be read while the other page (C2, C1) is written and vice versa;
using the two pages (C1, C2) alternately; and
initially storing all the calibration parameters on a first page (C1), which is read-queried by a microprocessor (2);
the method is **characterized in that** it comprises the further steps of:
clearing a second page (C2) so that it is empty and available;
when a modification of the calibration parameters is needed and while the microprocessor (2) keeps read-querying only the first page (C1), copying the entire content of the first page (C1) on the second page (C2) changing during said copying the calibration parameters so that the calibration parameters written on the second page (C2) contain the modification;
after copying, having the microprocessor (2) query only the second page (C2) instead of the first page (C1) to make the microprocessor (2) use the calibration parameters containing the modification;
clearing, after copying, the first page (C1) so that it is empty and available; and
repeating, when a further modification of the calibration parameters is needed, the steps described above, reversing the roles of the two pages (C1, C2) so that the calibration parameters containing the further modification are copied onto the first page (C1) while the microprocessor (2) continues to read-query only the second page (C2).

2. The method according to claim 1 and comprising the further step of using a management unit (10) of the memory of the microprocessor (2) which modifies the pointing of the virtual address of the calibration parameters used by a control software to alternate the use of the two pages (C1, C2).

3. The method according to claim 1 or 2 and comprising the further step of dividing the FLASH storage memory (4) in a first area (S) that stores a control software and a second area (C) in which the two pages (C1, C2) for the values of the calibration parameters are created; the second area (C) and the first area (S) lie on two different read-while-write partitions so that the first area (S) can be viewed without interruption while a page (C1, C2) of the first area (S) is written.

4. The method according to one of the claims from 1 to 3, comprising the further steps of:
connecting to the microprocessor (2) of the electronic control unit (1) an external computer (8) via a communication line (9) and
accessing the working SRAM memory (3) of the external computer (8) through the communication line (9).

5. The method according to claim 4, wherein the communication line (9) operates according to the "CAN" standard.

6. The method according to claim 4, wherein the communication line (9) operates according to a standard synchronous serial communication of the "SPI" type.

7. The method according to claim 6, comprising the further steps of:
connecting the communication line (9) to a serial Ethernet or USB port of the external computer (8); and
interposing in the communication line (9) a bridge (11) that translates the synchronous serial "SPI" signal in a USB or Ethernet signal and vice versa.

8. The method according to claim 7, wherein the bridge (11) is "intelligent" and has its own microprocessor (13) that handles the communication to the external computer (8) independently from the microprocessor (2) of the electronic control unit (1).

9. The method according to claim 7 or 8, wherein the standard of synchronous serial communication of the "SPI" type is the "Nexus" standard or the "JTAG" standard.

10. A method for operating one electronic control unit (1) during a calibration phase; the electronic control unity (1) comprises a microprocessor (2), a working SRAM memory (3), and a FLASH storage memory (4) that normally contains a control software and the values of the calibration parameters used by the control software; the method comprises the steps of:
adding, only during the calibration phase, to the electronic control unit (1) an additional SRAM memory (12), which is sized to hold the values of the calibration parameters and is used;
using, only during the calibration phase, the additional SRAM memory (12) to hold the values of the calibration parameters, and
connecting to a microprocessor (2) of the electronic control unit (1) an external computer (8) via a communication line (9) that operates on a synchronous serial communication standard such as "SPI" to read/write access to additional SRAM memory (12).

11. The method according to claim 10 and comprising the further steps of:
connecting the communication line (9) to a serial Ethernet or USB port of the external computer (8); and
interposing in the communication line (9) a bridge (11) that translates the synchronous serial "SPI" signal into a USB or Ethernet signal and vice versa.

12. The method according to claim 11, wherein the bridge (11) is "intelligent" and has its own microprocessor (13) that handles the communication to the external computer (8) independently by the microprocessor (2) of the electronic control unit (1).

13. The method according to claim 10, 11 or 12, wherein the standard of synchronous serial communication of the "SPI" type is the "Nexus" standard or the "JTAG" standard.
